(19) Europäisches Patentamt
European Patent Office
Office européen des brevets

(11) Veröffentlichungsnummer: **0 485 793 B1**

(12) **EUROPÄISCHE PATENTSCHRIFT**

(45) Veröffentlichungstag der Patentschrift: **08.02.95**

(51) Int. Cl.[6]: **C08L 55/02**, //(C08L55/02, 25:04,51:04)

(21) Anmeldenummer: **91118316.8**

(22) Anmeldetag: **28.10.91**

# (54) Verstärkte ABS-Formmassen enthaltend tert.-alkylesterhaltige Pfropfpolymerisate, deren Herstellung und Verwendung.

(30) Priorität: **10.11.90 DE 4035849**
**22.12.90 DE 4041469**

(43) Veröffentlichungstag der Anmeldung:
**20.05.92 Patentblatt 92/21**

(45) Bekanntmachung des Hinweises auf die Patenterteilung:
**08.02.95 Patentblatt 95/06**

(84) Benannte Vertragsstaaten:
**DE FR GB IT**

(56) Entgegenhaltungen:
**EP-A- 0 303 919**
**EP-A- 0 360 129**

**WORLD PATENTS INDEX LATEST Week 8827, Derwent Publications Ltd., London, GB; AN 88-186197**

(73) Patentinhaber: **BAYER AG**

**D-51368 Leverkusen (DE)**

(72) Erfinder: **Heger, Georg, Dr.**
**Uerdinger Strasse 260**
**W-4150 Krefeld (DE)**
Erfinder: **Piejko, Karl-Erwin, Dr.**
**Unterscheider Weg 7a**
**W-5060 Bergisch Gladbach 2 (DE)**
Erfinder: **Buekers, Josef**
**Kneinstrasse 58A**
**W-4150 Krefeld 1 (DE)**
Erfinder: **Lindner, Christian, Dr.**
**Im Wasserblech 11**
**W-5000 Köln 80 (DE)**
Erfinder: **Frohberg, Ekkehard, Dr.**
**Offenbachstrasse 33**
**W-5000 Köln 71 (DE)**

**EP 0 485 793 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft mit Füllstoffen verstärkte ABS-Formmassen, enthaltend spezielle Pfropfpolymere mit tert.-Alkylacrylaten in der Pfropfhülle, sowie deren Herstellung.

Mischungen aus Pfropfpolymerisaten, Harzen und Füllstoffen sind bekannt (H.G. Elias, "Makromoleküle" Huthig & Wepf Verlag Basel, Heidelberg, New York 1981, Seiten 994 ff.), denn für viele Anwendungen reicht die Festigkeit und Steifigkeit unverstärkter Polymere nicht aus. Durch Ausrüstung mit Verstärkungsstoffen werden diese Nachteile weitgehend überwunden. So werden den Thermoplasten beispielsweise Glasfasern oder modifizierte Mineralien in der Schmelze zugesetzt.

Bekanntlich muß zur Kunststoffverstärkung zunächst eine Schlichte üblicher Zusammensetzung auf Glasfasern, insbesondere E-Glasfasern, aufgebracht werden, um zwischen der Matrix und dem Verstärkungsstoff eine gute Verbundhaftung zu erreichen. In der Praxis erfolgt die Präparation der Glasfaserstoffe in einer Spinnschlichte. Sie enthält für die Herstellung von Glasseide hauptsächlich Bindemittel in wäßriger Dispersion zur Bündelung der Vielzahl von Einzelfäden, geeignete Haftvermittler, wie beispielsweise Trimethoxyaminopropylsilan, die eine bessere Haftung zwischen Füllstoff und Polymermatrix sowie eine gute Einarbeitung der Füllstoffe gewährleisten sollen, sowie Hilfsmittel für die Verarbeitbarkeit der Fäden in Nachfolgestufen (siehe K.L. Löwenstein, "The manufacturing technology of continuous glass fibres", Elsevier Scientific Publishing Company, Amsterdam, London, New York, 1973, p. 191-233).

Die Glasfaserverstärkung führt meist nur zu einer partiellen Verbesserung der mechanischen Eigenschaften. Während Steifigkeit und Festigkeit zumeist stark ansteigen, nimmt die Elastizität, insbesondere die Schlagzähigkeit oft deutlich ab. Um eine wirksame Verstärkung bei möglichst geringem Zähigkeitsabfall zu erreichen, soll eine gute Haftung oder Ankopplung zwischen der Matrix und den Verstärkungsstoffen bestehen.

In der JP 56/095 953 werden glasfaserverstärkte Formmassen beschrieben, die aus Glasfaser enthaltenden Polymerpellets und glasfaserfreien thermoplastischen Harzen bestehen. Die Glasfaser enthaltenden Polymerpellets werden durch Polymerisation von Styrol/Acrylnitril in Gegenwart von löslichen, d.h. unvernetzten säurefunktionellem Acrylatkautschuk und Glasfasern in Suspension und anschließender Trocknung erhalten. Bei diesem technisch schwer zu steuernden Prozeß (Suspensionspolymerisation und Trocknung in Gegenwart von Glasfasern) wird keine gute Phasenankopplung der Verstärkungsmittel und der Thermoplastmatrix erreicht.

Die DE-OS 3 436 602 beschreibt glasfaserverstärkte thermoplastische Harzmassen, bestehend aus einem Harz A) aus einem vinylaromatischen Monomeren (Styrol), Nitrileinheiten (Acrylnitril) und Methacrylaten, einem Harz B) aus Maleinimiden, Vinylaromaten (Styrol) und Vinylmonomeren (Acrylnitril) und einem Harz C) aus vinylaromatischen Monomeren (Styrol) und ungesättigten Nitrilmonomeren (Acrylnitril) und einem Pfropfkautschuk D). A ist dadurch gekennzeichnet, daß das Harz in Gegenwart der Glasfasern durch Suspensionspolymerisation hergestellt wird. Die Mischung besitzt eine besonders hohe Hitzefestigkeit. Aus den physikalischen Eigenschaften geht hervor, daß die Ankopplung an die Glasfasern auch hier unzureichend ist. In EP-A 303 919 werden glasfaserverstärkte Formmassen beansprucht, bestehend aus einem Harz A aus Styrol bzw. Styrolderivaten, (Meth)acrylnitril und/oder Methyl(meth)acrylat und einem Harz B aus Styrol bzw. Styrolderivaten, (Meth)acrylnitril und/oder Methylmethacrylat sowie tert.-Butylacrylat und einer Komponente C, einem Pfropfpolymerisat aus einem Kautschuk-Kern und einer Hülle aus einem vinylaromatischen Monomer, (Meth)acrylnitril und (Meth)acrylsäureestern. Bei diesen Formmassen kann es im technischen Maßstab jedoch zu Abspinnproblemen beim Extrudieren kommen.

AU 86 60580 lehrt, daß man schlagzähe Harze aus aromatischen Vinylcopolymeren mit ungesättigtem Nitril und weniger als 15 Gew.-% Kautschukanteilen erhält, indem man als Modifikator ein Pfropfpolymerisat aus einem Kautschukkern und einer Pfropfhülle aus Vinylaromaten, Vinylcyaniden und Methacrylsäurederivaten hinzugibt. Diese Mischungen können auch Glasfasern enthalten.

Auch diese Verbunde werden bei mehraxialer Belastung, die z.B. für schlagbeanspruchte Gehäuseteile sehr wichtig ist, nicht immer allen Anforderungen gerecht.

Eine mangelnde Phasenankopplung zwischen dem Füllstoff und der Thermoplastmatrix zeigt sich besonders in den Langzeiteigenschaften der aus diesen Materialien hergestellten Formteile.

Der Erfindung lag daher die Aufgabe zugrunde, verstärkte ABS-Formmassen bereitzustellen, die, basierend auf in unverstärkten Einstellungen bewährten und durch übliche technische Prozesse herstellbare Formmassenzusammensetzungen, gute Verbundhaftung oder Phasenankopplung zwischen der ABS-Matrix und den Glasfasern und daraus resultierend ein verbessertes Eigenschaftsniveau aufweisen.

Formmassen aus verstärktem Polyamid, die Kautschuk-(auch Pfropfkautschuk-) Polymerisate mit u.a. Carboxy- oder latenten Carboxygruppen enthalten, sind bekannt. Diese Formmassen weisen eine verbesserte Lackierbarkeit und Oberflächenstruktur auf (EP-A 327 978). Die Reaktionsgruppen enthaltenden

Kautschukpolymerisate sind schlagzähmodifizierend und besitzen deshalb Kautschukgehalte von 25 bis 98 Gew.-%. Charakteristisch ist ein Abfall des E-Moduls bei Kautschukpolymerisatgehalten über die erfindungsgemäß geeigneten Gehalte von 0,5 bis 3 Gew.-% hinaus.

Tertiär-alkylestergruppenhaltige Pfropfpolymerisate können gegebenenfalls in Formmassen nach der DE-OS 3 805 377 aus Polypropylen/Polyamid mit einem funktionellen Ethylencopolymer als Verträglichkeitsvermittler enthalten sein. Die Formmassen können auch verstärkt sein. Das Ethylencopolymer muß vorhanden sein. Eine verträglichkeitsvermittelnde Wirkung der Pfropfkautschukkomponente ist nicht zu erkennen.

Gegenstand der Erfindung sind mit Füllstoffen verstärkte ABS-Formmassen enthaltend 3 bis 25 Gew.-% tertiäre-alkylestergruppenhaltige Pfropfpolymerisate auf Basis von Dien- oder Acrylatkautschuken.

Gegenstand der Erfindung sind vorzugsweise ABS-Formmassen aus:

A) gepfropftem Kautschuk und

B) thermoplastischem Harz auf Basis von Styrol, α-Methylstyrol, Acrylnitril, Methylmethacrylat und Maleinsäureanhydrid oder Mischungen daraus,

wobei der Gesamtanteil von A) und B) an der Mischung ((A + B) + C + D) 86 bis 15 Gew.-%, bevorzugt 85,5 bis 30 Gew.-% und besonders bevorzugt 83 bis 48 Gew.-% beträgt, enthaltend

C) 3 bis 25 Gew.-%, bevorzugt 4,5 bis 20 Gew.-%, insbesondere 5 bis 12 Gew.-% tertiäre-alkylestergruppenhaltige Pfropfpolymerisate auf Basis von Dien- oder Acrylatkautschuken, wobei es sich bei den tertiären Alkylestergruppen um tertiäre (Meth)acrylsäureester der allgemeinen Formel

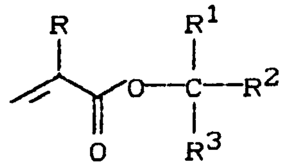

mit R = H, $CH_3$ und

$R_1$, $R_2$, $R_3$ = Alkyl, so daß die Summe der C-Atome in $R_1$, $R_2$ und $R_3$ 3 - 9 beträgt,

handelt und

D) 10 bis 60 Gew.-%, bevorzugt 10 bis 50 Gew.-%, besonders bevorzugt 12 bis 40 Gew.-%, insbesondere 12 bis 25 Gew.-% Füllstoffe,

wobei die Summe aus ABS-Anteil (A + B) und den Komponenten C + D 100 Gew.-% ergibt.

Die erfindungsgemäßen Formmassen weisen eine verbesserte Haftung zu den Füllstoffen und verbesserte technologische Eigenschaften, wie erhöhte Zähigkeiten bei unveränderten Steifigkeiten und Festigkeiten auf.

ABS-Formmassen aus A und B im Sinne der Erfindung sind insbesondere Mischungen aus

A-a) 5 bis 70 Gew.-% eines oder mehrerer Pfropfprodukte, und

B-a) 95 bis 30 Gew.-% eines oder mehrerer thermoplastischer Harze.

Pfropfprodukte (gemäß A-a) sind bevorzugt Polymerisate, die durch Polymerisation von Pfropfmonomeren in Anwesenheit eines Kautschuks als Pfropfbasis erhalten werden. Der Kautschukanteil ist 5 bis 80 Gew.-% und wird durch das Polymerisationsverfahren mitbestimmt.

Als Pfropfbasis kommen insbesondere Polybutadien-, Butadien/Acrylnitril- und Butadien/Styrol-Polymerisate sowie Butadien-Styrol-Blockpolymerissate in Betracht. Ebenfalls verwendbar sind Acrylatpolymerisate, Acrylester-Vinylether-Copolymerisate und EPDM-Terpolymerisate.

Pfropfmonomere sind hauptsächlich Styrol, Gemische aus Styrol und Acrylnitril, bevorzugt im Gewichtsverhältnis 90:10 bis 50:50, Gemische aus Styrol und Methylmethacrylat, bevorzugt im Gewichtsverhältnis 5:95 bis 95:5 sowie Styrol-Acrylnitril-Methylmethacrylat-Gemische. Die Herstellung der Pfropfprodukte ist bekannt:

Man kann die Pfropfmonomeren in Gegenwart eines Latex der Pfropfbasis in Emulsion mit Hilfe von radikalischen Initiatoren polymerisieren. Ist die Pfropfbasis anvernetzt und werden bestimmte Pfropfmonomer/Pfropfbasis-Verhältnisse eingehalten, so ist die Teilchengröße des Latex der Pfropfbasis auch bestimmend für die Teilchengröße des Pfropfpolymerisats. Die Pfropfhülle, aus chemisch an die Kautschukteilchen gebundenen Ketten des Polymerisats der Pfropfmonomeren, ist verhältnismäßig dünn und ändert den Durchmesser des Kautschukteilchens nicht wesentlich, "Durchmesser" oder "Teilchengröße" ist hierbei der mittlere Durchmesser $d_{50}$, d.h. der Durchmesser, oberhalb dessen und unterhalb dessen die Durchmesser von jeweils 50 % der Teilchen liegen. Die Pfropfreaktion ist unvollständig. Neben dem eigentlichen

Pfropfpolymerisat entsteht auch das nicht gepfropfte Copolymere der Pfropfmonomeren. Deshalb wird das Produkt der Pfropfreaktion als "Pfropfprodukt" bezeichnet.

Man kann Pfropfprodukte auch durch Masse-Lösungs- oder Masse-Suspensions-Polymerisation herstellen, wenn man von einem monomerlöslichen Kautschuk ausgeht. Die Größe der Pfropfkautschukteilchen wird dann durch die Phaseninversion festgelegt und kann sowohl mechanisch durch Rühren als auch durch chemische Beeinflussung des Phasengleichgewichts (Zusatz von Dispergatoren) variiert werden. Im allgemeinen werden so Teilchen ≧1 μ erhalten. Das Pfropfprodukt enthält max. ca. 25 Gew.-% Kautschuk.

Man kann erfindungsgemäß Pfropfprodukte verwenden, deren Teilchen einen Durchmesser von 0,05 bis 20 μ haben, wobei ein erheblicher Teil der Pfropfmonomeren im Innern des Kautschukteilchens als Homo- oder Copolymerisat includiert sein kann. Bevorzugt sind Teilchendurchmesser von 0,05 bis 1,2 μ bzw. 0,05 bis 0,6 μ. Es ist auch möglich, mehrere voneinander verschiedene Pfropfprodukte nebeneinander einzusetzen, z.B. zwei Pfropfprodukte, die sich durch den Pfropfgrad bzw. die Pfropfdichte, die Kautschukteilchengröße und/oder die Pfropfdichte unterscheiden, Besonders geeignet ist beispielsweise ein Gemisch aus einem Pfropfprodukt aus Kautschukteilchen mit einem $d_{50}$-Wert von 0,35 bis 10 μ und einem Pfropfprodukt aus Kautschukteilchen mit einem mittleren Teilchendurchmesser $d_{50}$ von 0,05 bis 0,32 μ, d.h., sogenannte Bimodal-Systeme.

Bevorzugt enthalten die Pfropfprodukte 30 bis 80 Gew.-% (insbesondere 40 bis 75 Gew.-%) Kautschuk, besitzen einen mittleren Teilchendurchmesser im Bereich 0,1 bis 0,5 μ und werden in einer solchen Menge eingesetzt, daß die ABS-Formmasse 5 bis 25 Gew.-%, vorzugsweise 5 bis 20 Gew.-% Kautschuk (Pfropfbasis) enthält.

Das den zweiten Bestandteil der ABS-Formmassen gemäß (B-a) bildende thermoplastische Harz bildet die kontinuierliche Phase (Matrix) und ist ein Polymerisat oder Copolymerisat von Styrol, α-Methylstyrol, Acrylnitril, Methylmethacrylat und Maleinsäureanhydrid. Bevorzugt sind Polystyrol, Styrol-Acrylnitril-Copolymerisate mit einem Acrylnitril-Gehalt von 20 bis 35 Gew.-% sowie α-Methylstyrol-Acrylnitril-Copolymere mit einem Acrylnitril-Gehalt von 20 bis 31 Gew.-%. Das Gewichtsmittel des Molekulargewichts dieser Harze ist 50 000 bis 550 000. Die molekulare Uneinheitlichkeit, ausgedrückt durch den Wert

$$\frac{M_w}{M_n} - 1 = U_n$$

ist 1,0 bis 3,5.

Wird nur ein Pfropfprodukt zur Herstellung der Formmassen verwendet, so ist es vorteilhaft, wenn die quantitative Zusammensetzung der Pfropfmonomeren und die der das Harz bildenden Monomeren weitgehend übereinstimmen. Verwendet man zwei Pfropfprodukte, so ist es vorteilhaft, wenn das Mengenverhältnis der Styrol- und Acrylnitrilteile im Polymerisat der Pfropfhülle der grobteiligeren Pfropfkomponente von dem des Harzes abweicht.

Die Styrol- bzw. α-Methylstyrol-Acrylnitril-Copolymerisate können nach bekannten Verfahren hergestellt werden. Beispielhaft seien genannt: Masse-Polymerisation, Lösungs-Polymerisation, Suspensions-Polymerisation und Emulsions-Polymerisation.

Pfropfprodukte und thermoplastisches Harz werden häufig getrennt hergestellt; beide meist durch Emulsionspolymerisation. Fallen beide als Latex an, so können die Latices gemischt und gemeinsam ausgefällt werden.

Die erfindungsgemäß geeigneten tertiären alkylestergruppenhaltigen Pfropfpolymerisate C) sind bevorzugt Pfropfpolymerisate mit Pfropfhüllen C 1) aus

C 1.1) wenigstens einem Monomer aus der Reihe der Styrole, der α-Methylstyrole, Acrylnitril, Methacrylnitril, der Vinyl-C1 -C4-Carbonsäuren, Ester der (Meth)acrylsäure mit primären und sekundären C1-C10-Alkoholen, wobei Styrole oder α-Methylstyrole in Kombination mit Acrylnitril bevorzugt sind, und

C 1.2) wenigstens einem Ester der (Meth)acrylsäure mit tert.-C4-C10-Alkoholen gemäß o.g. Formel, in Mengen von 1 bis 12 Gew.-% in der Pfropfhülle C 1),

gepfropft auf eine teilchenförmige Kautschukgrundlage C 2) mit Glastemperaturen < 0 °C, insbesondere < -20 °C, wobei die Pfropfpolymerisate C) Kautschukanteile von 5-45 Gew.-%, bevorzugt 10-35 Gew.-%, insbesondere 15-25 Gew.-% aufweisen.

Bevorzugte Monomere C 1.1) als Monomerbausteine der Pfropfhülle C 1) sind Styrol, α-Methylstyrol einerseits und als weitere Monomere Acrylnitril, Methylmethacrylat, n-Butylacrylat, Cyclohexylmethacrylat und Vinylacetat; besonders bevorzugt sind Styrol, α-Methylstyrol und Acrylnitril. Die Styrole und α-Methylstyrole können dabei am aromatischen Ring alkyl-, halogenalkyl-oder halogensubstituiert sein, z. B.

durch C1-C3-Alkyl-, halogenhaltige (C1-C3)-Alkyl- und/oder Halogengruppen, bevorzugt jedoch sind Styrol und $\alpha$-Methylstyrol.

Besonders bevorzugte Monomere C 1.2) sind tert.-Butylacrylat, tert.-Butylmethacrylat, tert.-Pentylmethacrylat und tert.-Hexylacrylat, sowie gegebenenfalls tert. Octyl(meth)acrylat.

Die Pfropfhülle C 1) enthält im allgemeinen bis zu 15 Gew.-%, bevorzugt 1 bis 12 Gew.-%, besonders bevorzugt 2 bis 10 Gew.-% der Monomere C 1.2).

Die teilchenförmige Kautschukgrundlage C 2) ist ein radikalisch hergestelltes Emulsionspolymerisat aus wenigstens teilvernetzten Dien- oder Alkylacrylatkautschuken mit mittleren Teilchendurchmessern ($d_{50}$-Wert) von 80-700 nm, bevorzugt 100 - 400 nm.

Dienkautschuke sind z. B. Polybutadien, Polyisopren und Copolymerisate von Butadien mit bis zu 35 Gew.-% Comonomeren wie Styrol, Acrylnitril, Methylmethacrylat, C1-C6-Alkylacrylat. Acrylatkautschuke sind z. B. vernetzte teilchenförmige Emulsionspolymerisate aus C1-C6-Alkylacrylaten, insbesondere C2-C6-Alkylacrylaten, gegebenenfalls in Mischung mit bis zu 15 Gew.-% Comonomeren wie Styrol, Methylmethacrylat, Butadien, Vinylmethylether, Acrylnitril und wenigstens einem polyfunktionellen vernetzenden Comonomer, z B. Divinylbenzol, Glykol-bis-acrylate, Bisacrylamide, Phosphorsäuretriallylester, Allylester der (Meth)acrylsäure, Triallylisocyanurat, wobei die Acrylatkautschuke bis zu 4 Gew.-% der vernetzenden Comonomere enthalten können. Solche Kautschukgrundlagen sind bekannt. Besonders geeignete Acrylat-Kautschukgrundlagen besitzen eine Kern-Mantel-Struktur, wie in DE-OS 3 006 804 vorbeschrieben, insbesondere einen Kernanteil von 0,5-10, vorzugsweise 2-4 Gew.-%.

Die Kautschukgrundlage C 2) besitzt Gelgehalte (als Maß für die Vernetzung) von größer 60 Gew.-%, vorzugsweise > 75 Gew.-%. Die Gelgehalte werden nach M. Hoffmann et. al., Polymeranalytik I und II, Georg Thieme-Verlag, Stuttgart (1977) bestimmt.

Die Herstellung der erfindungsgemäßen Pfropfpolymerisate C) erfolgt nach bekannten Methoden durch wäßrige Emulsionspolymerisation mit radikalbildenden Initiatoren bei Temperaturen zwischen 50 und 90 °C. Geeignete Initiatoren sind beispielsweise Persulfat, Perphosphat, Hydroperoxide oder Azoverbindungen. Bevorzugt sind anorganische, wasserlösliche Initiatoren. Die Pfropfpolymerisation auf die bekannten Kautschuke erfolgt vorteilhaft unter Mitverwendung anionischer Emulgatoren vom Typ der Carbonsäuresalze, z. B. Salze der Ölsäure, Stearinsäure, Harzsäuren, Abietinsäure sowie deren disproportionierte Derivate.

Als Verstärkungsmittel (Komponente D) werden bevorzugt Glasfasern, insbesondere E-Glasfasern verwendet. Die Glasfasern sind geschlichtet und haben im allgemeinen eine mittlere Länge von 0,05 bis 0,5 mm und einen Durchmesser von 8 bis 15 $\mu$m. Glasfasern anderer Länge oder Durchmesser können ebenfalls verwendet werden.

Die erfindungsgemäßen Formmassen können anstelle von oder in Kombination mit Glasfasern auch Glaskugeln, Kohlenstoffasern, Fasern aus flüssig-kristallinen Polymeren oder anorganische Verstärkungsmaterialien enthalten. Dies sind beispielsweise Keramikfüllstoffe, wie Aluminium- und Bornitrid, oder mineralische Füllstoffe, wie Asbest, Talkum, Wollastonit, Microvit, Silikate, Kreide, calcinierte Kaoline, Glimmer und Quarzmehl. Diese können mit den üblichen Schlichten und Haftvermittlern auf Organosilanbasis, wie z.B. Trimethoxyaminopropylsilan beschichtet sein. Sofern andere Verstärkungsmaterialien außer Glasfasern allein verwendet werden, muß wenigstens eines dieser Materialien mit den üblichen Schlichten oder Haftvermittlern auf Organosilanbasis beschlichtet sein.

Darüber hinaus können die erfindungsgemäßen Formmassen auch die üblichen Zusätze, wie Farbstoffe, Pigmente, Stabilisatoren, Flammschutzadditive, Nukleierungs-, Schmier- und Entformungsmittel enthalten.

Für die Herstellung der erfindungsgemäßen Formmasen sind die bei verstärkten Thermoplasten üblichen Verfahren anwendbar, Die Einarbeitung des Füllstoffs D in die ABS-Formmasse kann auf Knetern, Walzen oder Ein- oder Mehrwellenextrudern bei Temperaturen oberhalb 200 °C erfolgen, indem man die ABS-Formmasse gemäß A) und B) vorlegt und die Komponente C) bzw. die ABS-Formmasse gemäß A) und B) der vorgelegten Komponente C) zumischt und den Füllstoff D der homogenisierten Schmelze zusetzt. Es ist jedoch auch möglich, alle drei Komponenten A, B und C vor der Verarbeitung zu vermischen und dann D der Schmelze zuzusetzen. Die Menge der Additive wird dabei so bemessen, daß die Additive die gewünschte Wirkung in der Mischung entfalten können. Sie ist leicht durch Vorversuche zu ermitteln.

Die erfindungsgemäßen Formmassen zeichnen sich durch eine erhöhte Ankopplung der Matrix an die Füllstoffe und durch verbesserte Zähigkeiten aus.

Beispiele

Zusammensetzung der eingesetzten Komponenten:

A1: Pfropfpolymerisat aus 55 Gew.-% eines grobteiligen Polybutadienlatex eines mittleren Teilchendurchmessers von 385 nm ($d_{50}$-Wert), bepfropft mit 45 Gew.-% einer Monomermischung aus 72 Gew.-% Styrol und 28 Gew.-% Acrylnitril in wäßriger Emulsion.

A2: Pfropfpolymerisat aus 55 Gew.-% eines feinteiligen Polybutadienlatex eines mittleren Teilchendurchmessers von 140 nm ($d_{50}$-Wert), bepfropft mit 45 Gew.-% einer Monomermischung aus 72 Gew.-% Styrol und 28 Gew.-% Acrylnitril in wäßriger Emulsion.

B: Styrol/Acrylnitrilharz mit 72 Gew.-% Styrol und einer Grenzviskositätszahl von 0,75 dl/g (in Dimethylformamid bei 25 °C gemessen), hergestellt durch Lösungspolymerisation.

C: Pfropfpolymerisat aus 30 Gew.-% eines grobteiligen Polybutadienlatex eines mittleren Teilchendurchmessers von 385 nm ($d_{50}$-Wert), bepfropft mit 70 Gew.-% einer Monomermischung aus 69,5 Gew.-% Styrol, 27 Gew.-% Acrylnitril und 3,5 Gew.-% tert.-Butylacrylat in wäßriger Emulsion.

D: Glasfasern: Typ CS 7911 ( Handelsprodukt der Fa. Bayer);
mittlerer Teilchendurchmesser: 10 µm, mittlere Länge 6 mm.

Herstellung der erfindungsgemäßen und Vergleichsformmassen

I. auf einem Innenkneter

Die Komponenten A-C werden vermischt und auf einem Innenkneter vom Banburry-Typ unter Zusatz der Glasfasern bei einer Massetemperatur von 240 °C compoundiert. Die Zusammensetzung der Formmassen ist in Tabelle 1a angegeben.

Tabelle 1a

| Zusammensetzung der Formmassen (Angaben in Gew.-%): | | | | | |
|---|---|---|---|---|---|
| Beispiel Nr. | A1 | A2 | B | C | D |
| 1a (Vergleich) | 12,5 | 12,5 | 59,0 | - | 16,0 |
| 2a | 13,2 | 12,0 | 55,3 | 3,5 | 16,0 |
| 3a | 17,5 | 12,5 | 42,0 | 12,0 | 16,0 |

II. auf einem Zweiwellenschneckenkneter (ZSK)

Die Komponenten A-C werden vermischt und auf einer ZSK 53 unter Zusatz der Glasfasern bei einer Massetemperatur von 240 °C verarbeitet. Die Zusammensetzung der Formmassen ist in Tabelle 1b angegeben.

Tabelle 1b

| Zusammensetzung der Formmassen (Angaben in Gew.-%): | | | | | |
|---|---|---|---|---|---|
| Beispiel Nr. | A1 | A2 | B | C | D* |
| 1b (Vergleich) | 12,6 | 12,6 | 58,9 | - | 15,9 |
| 2b | 15,2 | 12,7 | 50,5 | 5,6 | 16,0 |
| 3b | 11,2 | 8,7 | 58,9 | 5,6 | 15,6 |
| 4b | 6,7 | 4,1 | 67,9 | 5,6 | 15,7 |
| 5b | 10,1 | 6,3 | 58,6 | 8,9 | 16,1 |
| 6b | 7,6 | - | 58,6 | 17,7 | 16,1 |

*) Gehalt nach Aschebestimmung

Prüfung der Formmassen

Von den Formmassen wurden auf einer üblichen Spritzgußmaschine bei einer Zylindertemperatur von 240 °C und einer Formtemperatur von 70 °C Schulterstäbe entsprechend DIN 53 455 und Normkleinstäbe (50 mm x 6 mm x 4 mm) hergestellt. Geprüft wurden im Zugversuch (DIN 53 455) die Reißfestigkeit und der Zug-E-Modul, die Wärmeformbeständigkeit Vicat-B (DIN 53 460) sowie im Schlagversuch (DIN 53 453) die Schlagzähigkeit bzw. Kerbschlagzähigkeit bei verschiedenen Temperaturen. Die Zusammenfassung der untersuchten Eigenschaften ist in den Tabellen 2a und 2b angegeben.

Tabelle 2a

| Prüfergebnisse der Kneter-Versuche | | | | | |
|---|---|---|---|---|---|
| Beispiel Nr. | $a_n$ *) (RT) kJ/m² | $a_n$ *) (-40 °C) kJ/m² | $a_k$ +) (RT) kJ/m² | $a_k$ +) (-40 °C) kJ/m² | Vicat-B °C |
| 1a (Vergleich) | 16,3 | 20,4 | 4,4 | 5,4 | 106 |
| 2a | 20,1 | 23,3 | 7,0 | 5,8 | 105 |
| 3a | 22,8 | 27,4 | 10,0 | 8,4 | 105 |

*) Schlagzähigkeit am Normkleinstab
+) Kerbschlagzähigkeit am Normkleinstab
RT = Raumtemperatur

Tabelle 2b Prüfergebnisse der ZSK-Versuche

| Beispiel Nr. | Reiß-festigkeit N/mm² | Zug-E-Modul N/mm² | $a_n$ *) (RT) kJ/m² | $a_n$ *) (-40° C) kJ/m² | $a_k$ +) (RT) kJ/m² | $a_k$ +) (-40° C) kJ/m² | Vicat B °C |
|---|---|---|---|---|---|---|---|
| 1b (Vergleich) | 81 | 5831 | 14,3 | 17,4 | 7,9 | 4,9 | 107 |
| 2b | 79 | 5499 | 18,7 | 24,3 | 9,1 | 7,3 | 108 |
| 3b | 86 | 6033 | 19,5 | 23,6 | 8,2 | 5,8 | 109 |
| 4b | 95 | 6545 | 19,4 | 24,1 | 8,2 | 5,6 | 110 |
| 5b | 86 | 6225 | 17,6 | 19,8 | 8,4 | 5,7 | 108 |
| 6b | 88 | 6280 | 20,3 | 25,3 | 9,0 | 6,0 | 108 |

*) Schlagzähigkeit am Normkleinstab
+) Kerbschlagzähigkeit am Normkleinstab
RT = Raumtemperatur

Wie die Prüfergebnisse belegen, bewirkt die Zugabe der Komponente C eine Erhöhung der Zähigkeiten unter Erhalt und zum Teil sogar Verbesserung der guten Wärmeformbeständigkeit und des hohen Zug-E-Modul.

Die rasterelektronenmikroskopischen Aufnahmen (REM-Aufnahmen) einer Bruchfläche verdeutlichen die unterschiedliche Matrixankopplung zwischen den Glasfasern und dem Thermoplasten.

Im Figur 1 (Vergleichsbeispiel 1a) ist zu erkennen, daß die Glasfasern nur lose in der Matrix liegen, denn ihre Oberfläche ist glatt und nicht eingehüllt. Bei der Schlagbeanspruchung lassen sie sich mangels Haftung leicht aus dem Verbund herausziehen.

Im Gegensatz zur Figur 1 (Vergleichsbeispiel 1a) ist in Figur 2 (Beispiel 3a - erfindungsgemäß) die gute Phasenankopplung zu erkennen, die durch den Zusatz der Komponente C hervorgerufen wird, Der größte Teil der Glasfaser ist von der Matrix umhüllt, die Oberflächen der Glasfasern sind rauh, Die verbesserte Verbundhaftung ist für die höheren Zähigkeiten dieser Compounds verantwortlich, denn es muß eine größere Energie aufgebracht werden, um die Glasfasern aus dem Verbund herauszuziehen.

**Patentansprüche**

**1.** Mit Füllstoffen verstärkte ABS-Formmassen enthaltend 3 bis 25 Gew.-% tertiäre alkylestergruppenhaltige Pfropfpolymerisate auf Basis von Dien- oder Acrylatkautschuken, wobei es sich bei den tertiären Alkylestergruppen um tertiäre (Meth)acrylsäureester der allgemeinen Formel

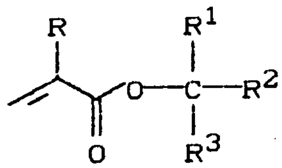

mit R = H, $CH_3$ und
$R_1$, $R_2$, $R_3$ = Alkyl, so daß die Summe der C-Atome in $R_1$, $R_2$ und $R_3$ 3 - 9 beträgt, handelt.

**2.** ABS-Formmassen gemäß Anspruch 1 aus
A) gepfropftem Kautschuk und
B) thermoplastischem Harz auf Basis von Styrol, α-Methylstyrol, Acrylnitril, Methylmethacrylat und Maleinsäureanhydrid oder Mischungen daraus,
wobei der Gesamtanteil von A) und B) an der Mischung ((A + B) + C + D) 86 bis 15 Gew.-% beträgt, enthaltend
C) 3 bis 25 Gew.-% tertiäre-alkylestergruppenhaltige Pfropfpolymerisate auf Basis von Dien- oder Acrylatkautschuken und
D) 10 bis 60 Gew.-% Füllstoffe,
wobei die Summe aus ABS-Anteil (A + B) + C + D 100 Gew.-% ergibt.

**3.** ABS-Formmassen gemäß Anspruch 2, wobei sich der Gesamtanteil von A) und B) zusammensetzt aus
A-a) 5 bis 70 Gew.-% eines oder mehrerer Pfropfprodukte und
B-a) 95 bis 30 Gew.-% eines oder mehrerer thermoplastischer Harze.

**4.** ABS-Formmassen gemäß Anspruch 1 und 2, wobei die tertiären-alkylestergruppenhaltige Pfropfpolymerisate C Pfropfpolymerisate sind mit Pfropfhüllen C1) aus
C 1.1) wenigstens einem Monomer aus der Reihe der Styrole, der α-Methylstyrole, Acrylnitril, Methacrylnitril, der Vinyl-C1 -C4-Carbonsäuren, Ester der (Meth)acrylsäure mit primären und sekundären C1-C10-Alkoholen, wobei Styrole oder α-Methylstyrole in Kombination mit Acrylnitril bevorzugt sind,
und
C 1.2) wenigstens einem Ester der (Meth)acrylsäure der Formel gemäß Anspruch 1, in Mengen von 1 bis 12 Gew.-% in der Pfropfhülle C 1),
gepfropft auf eine teilchenförmige Kautschukgrundlage C 2) mit Glastemperaturen $< 0\,^\circ C$, wobei die Pfropfpolymerisate C) Kautschukanteile von 5-45 Gew.-%, aufweisen.

**5.** Verwendung der Formmassen gemäß Anspruch 1 und 2 zur Herstellung von Formteilen.

**6.** Verfahren zur Herstellung von Formmassen gemäß Anspruch 1 und 2, wobei man die ABS-Formmasse gemäß A) und B) vorlegt und die Komponenten C) und D) zugibt oder A + B + C vermischt und dann Füllstoff D zu der Schmelze zudosiert.

## Claims

1. ABS moulding compounds reinforced with fillers and containing 3 to 25 wt.% of graft polymers based on diene or acrylate rubbers which contain tertiary alkyl ester groups, wherein the tertiary alkyl ester groups are tertiary (meth)acrylic esters of the general formula

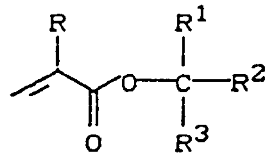

where R = H or $CH_3$ and
$R_1$, $R_2$, $R_3$ = alkyl, the sum of the carbon atoms in $R_1$, $R_2$ and $R_3$ being 3 - 9.

2. ABS moulding compounds according to Claim 1, made from
   A) a grafted rubber and
   B) a thermoplastic resin based on styrene, α-methylstyrene, acrylonitrile, methylmethacrylate and maleic anhydride or mixtures thereof,

   wherein the total proportion of A) and B) in the mixture ((A + B) + C + D) is 86 to 15 wt.%, containing
   C) 3 to 25 wt.% of graft polymers based on diene or acrylate rubbers which contain tertiary alkyl ester groups and
   D) 10 to 60 wt.% of fillers,

   wherein the sum of the ABS fraction (A + B) + C + D is 100 wt.%.

3. ABS moulding compounds according to Claim 2, wherein the total fraction of A) and B) is composed of
   A-a) 5 to 70 wt.% of one or more graft products and
   B-a) 95 to 30 wt.% of one or more thermoplastic resins.

4. ABS moulding compounds according to Claims 1 and 2, wherein the graft polymer C which contains tertiary alkyl ester groups are graft polymers with grafted envelopes C1) made of
   C 1.1) at least one monomer from the group consisting of styrenes, α-methylstyrenes, acrylonitrile, methacrylonitrile, vinyl $C_1$-$C_4$ carboxylic acids, esters of (meth)acrylic acid with primary and secondary $C_1$-$C_{10}$ alcohols, wherein styrene or α-methylstyrene combined with acrylonitrile are preferred,
   and
   C 1.2) at least one ester of the (meth)acrylic acid of the formula according to Claim 1, in amounts of 1 to 12 wt.% in the grafted envelope C1),

   grafted onto a particulate rubber substrate C2) with a glass transition temperature $< 0\,^\circ C$, wherein the graft polymer C) has a rubber fraction of 5-45 wt.%.

5. Use of the moulding compounds according to Claims 1 and 2 to prepare moulded items.

6. A process for preparing moulding compounds according to Claims 1 and 2, wherein the ABS moulding compounds in accordance with A) and B) are initially introduced and components C) and D) are added or A + B + C are mixed and then the filler D is added to the melt.

## Revendications

1. Matières à mouler ABS renforcées par des matières de charge, contenant de 3 à 25 % en poids de polymères greffés à groupes esters tert.-alkyliques à base de caoutchoucs diéniques ou de caoutchoucs d'acrylates, les groupes esters tert.-alkyliques consistant en groupes esters (méth)acryliques tertiaires de formule générale

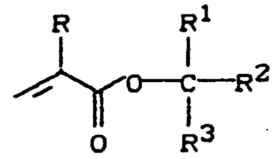

dans laquelle R = H, $CH_3$ et
$R_1$, $R_2$, $R_3$ = alkyle, la somme des atomes de carbone de $R_1$, $R_2$ et $R_3$ allant de 3 à 9.

**2.** Matières à mouler selon revendication 1, consistant en
A) un caoutchouc greffé et
B) une résine thermoplastique à base de styrène, d'α-méthylstyrène, d'acrylonitrile, de méthacrylate de méthyle et d'anhydride maléique ou leurs mélanges,
la proportion totale de A) et B) dans le mélange ((A + B) + C + D) étant de 86 à 15 % en poids, qui contiennent
C) 3 à 25 % en poids de polymères greffés à groupes esters tert.-alkyliques à base de caoutchoucs diéniques ou de caoutchoucs d'acrylates et
D) 10 à 60 % en poids de matières de charge,
la somme de la fraction d'ABS (A + B) + C + D représentant 100 % en poids.

**3.** Matières à mouler ABS selon revendication 2, le total de A) et B) se composant de
A-a) 5 à 70 % en poids d'un ou plusieurs produits de greffage et
B-a) 95 à 30 % en poids d'une ou plusieurs résines thermoplastiques

**4.** Matières à mouler ABS selon revendications 1 et 2, dans lesquelles les polymères greffés à groupes esters tert.-alkyliques C sont des polymères greffés à enveloppes de greffage C1) consistant en
C1.1) au moins un monomère de la classe des styrènes, des α-méthylstyrènes, de l'acrylonitrile, du méthacrylonitrile, des esters vinyliques d'acides carboxyliques en C1-C4, des esters (méth)-acryliques d'alcools primaires et secondaires en C1-C10, de préférence des styrènes ou des α-méthylstyrènes en combinaison avec l'acrylonitrile et
C1.2) au moins un ester (méth)acrylique de formule donnée dans la revendication 1, en quantités de 1 à 12 % en poids dans l'enveloppe de greffage C1),
greffés sur un support de caoutchouc à l'état de particules C2) ayant des températures de transition du second ordre inférieures < à 0°C, les polymères greffés C) contenant de 5 à 45 % en poids de caoutchouc.

**5.** Utilisation des matières à mouler selon revendication 1 et 2, pour la fabrication de pièces moulées.

**6.** Procédé de préparation des matières à mouler selon revendications 1 et 2, dans lequel on part de la matière à mouler ABS selon A) et B) et on ajoute les composants C) et D), ou bien on mélange les composants A + B + C et on ajoute la matière de charge D à la masse fondue.

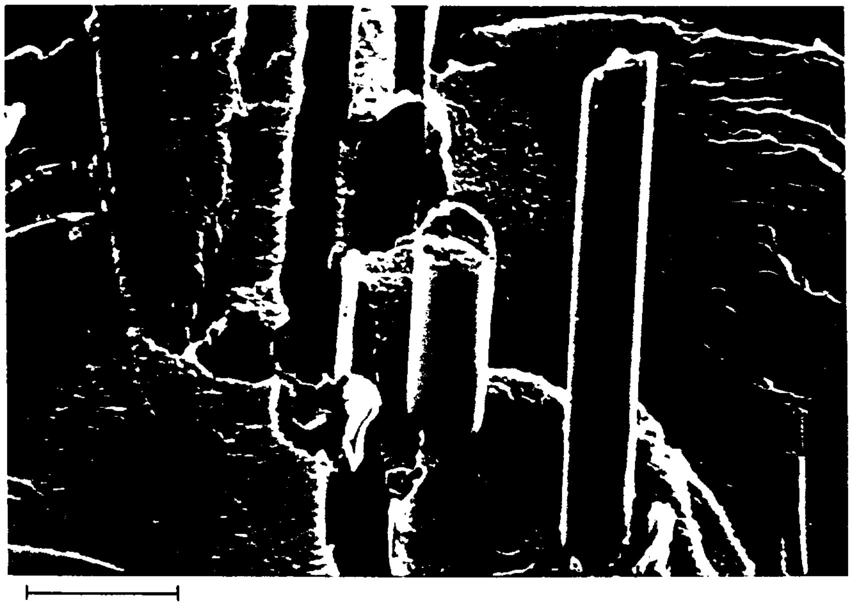


FIG.1

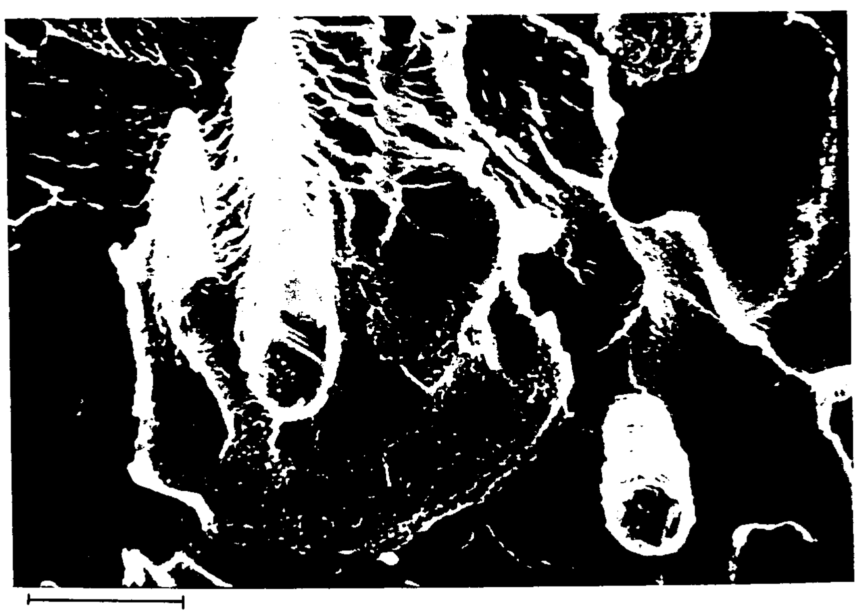


FIG.2